Europäisches Patentamt

European Patent Office

Office européen des brevets

(11) Veröffentlichungsnummer: **0 324 913 B1**

(12) **EUROPÄISCHE PATENTSCHRIFT**

(45) Veröffentlichungstag der Patentschrift: **09.09.92**

(21) Anmeldenummer: **88118934.4**

(22) Anmeldetag: **14.11.88**

(51) Int. Cl.⁵: **B60G 7/02**, B62D 17/00

(54) **Vorderachse.**

(30) Priorität: **21.01.88 DE 3801640**

(43) Veröffentlichungstag der Anmeldung:
**26.07.89 Patentblatt 89/30**

(45) Bekanntmachung des Hinweises auf die
Patenterteilung:
**09.09.92 Patentblatt 92/37**

(84) Benannte Vertragsstaaten:
**DE ES FR GB IT NL**

(56) Entgegenhaltungen:
**EP-A- 0 143 558       DE-A- 3 708 037**
**DE-A- 3 710 892       FR-A- 2 201 196**
**FR-A- 2 341 475       FR-A- 2 355 683**
**FR-A- 2 452 411       FR-A- 2 498 129**

(73) Patentinhaber: **Dr.Ing.h.c. F. Porsche Aktiengesellschaft
Porschestrasse 42
W-7000 Stuttgart 40(DE)**

(72) Erfinder: **Schaible, Walter, Dipl.-Ing.
Schauertstrasse 73
W-7251 Hemmingen(DE)**
Erfinder: **Eyb, Wolfgang, Dipl-Ing.
Justinus-Kerner-Strasse 5
W-7250 Leonberg(DE)**

## Beschreibung

Die Erfindung bezieht sich auf eine Vorderachse nach dem Oberbegriff des Anspruchs 1. Eine derartige Vorderachse ist aus FR-A-2 355 683 bekannt.

Aus der DE-A 37 08 037 ist eine Vorderachse mit einem Querträger bekannt, an dem über Gelenke ein Radführungsglied angelenkt ist. Die Befestigung der Achse an einem Längsträger des Fahrzeugaufbaus erfolgt durch Schrauben, die den Querträger mit seinem vorderen Bereich unmittelbar zum Fahrzeugaufbau verbinden. Der hintere Bereich wird gleichzeitig mit der Lenkerlagerung am Fahrzeugaufbau befestigt.

Aufgabe der Erfindung ist es, eine Vorderachse der Gattung nach dem Oberbegriff des Anspruchs 1 zu schaffen, die insbesondere für mehrere Radspurweiten an verschiedenen Fahrzeugen verwendbar ist und wobei die Radlenkereinheit der Achse darüberhinaus auch in einfacher Weise an einem Fahrzeug versetzbar und zu befestigen ist, wobei das eigentliche Radführungsglied wie z.B. ein Dreieckslenker hierbei mit dem Radträger verbunden bleiben und solche Radspurverstellungen keine wesentlichen Änderungen an der Lenkeinrichtung bedingen.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß bei einer aus einem Längsträger sowie einem Radführungsglied bestehenden Einheit in einfacher Weise eine Verwendung für Fahrzeuge mit verschiedenen Radspurweiten möglich ist. Der Anbau erfolgt vorzugsweise über hinterseitig im Querträger und vorderseitig im Fahrzeugaufbau festsetzbare Schrauben. Die gesamte Vorderachse kann auch außerhalb des Fahrzeugs vormontiert und mitsamt der Lenkvorrichtung ins Fahrzeug eingebaut werden. Der Querträger wird vorzugsweise unmittelbar am Fahrzeugaufbau befestigt und an diesem wird von der Unterseite des Fahrzeugs her, gut zugänglich, das hintere Ende des Längsträgers über Schrauben mit dem Fahrzeugaufbau verbunden. Das vordere Ende des Längsträgers wird vorzugsweise unmittelbar aufbauseitig gehalten, wobei beim Befestigen des Längsträgers das Radführungsglied an diesem in Gelenken schwenkbar verbunden ist. Neben der Verwendung für zwei Fahrzeuge mit verschiedenen Spurweiten, ist auch eine Verwendung in einem Fahrzeug möglich, das auf eine andere Spurweite umgerüstet werden soll. Ein vorderes Gelenk des Radführungsglied ist vorzugsweise unmittelbar ohne Zwischenschaltung einer Konsole über einen Lagerzapfen mit dem Längsträger verbunden. Ein hintenliegendes Gelenk ist vorzugsweise zwischen angeformten Flanschen des Längsträgers gehalten. Das Radführungsglied ist durch seine Gelenkaufnahme sowie durch die feste Verbindung mit dem Querträger und mit dem Fahrzeugaufbau in Längs- und Querrichtung stabil gehalten und über die wenigen Befestigungsschrauben einfach zu montieren.

Durch die Gelenkelastizitäten im vorderen Gelenk sind insbesondere Längsstöße elastisch aufzunehmen, wobei es gleichzeitig in Grenzen eine Querbewegung des Radführungsgliedes zuläßt. Das hintere Gelenk bildet ein sogenanntes Festlager mit einem ideellen Drehpunkt, wodurch eine Radstellungsänderung insbesondere bei Bremskräften in Richtung Nachspur erfolgen kann.

Zur unbehinderten Durchführung einer querverlaufenden Spurstange von der am Querträger befestigten Lenkvorrichtung zum Rad ist vorzugsweise der Längsträger mit einer entsprechend angegossenen Durchgangsöffnung versehen, die so ausgebildet und am Längsträger angeformt ist, daß eine Radspurverstellung in einfacher Weise ohne Demontage oder Lageveränderung der Lenkvorrichtung möglich wird.

Ein Ausführungsbeispiel der Erfindung ist in der Zeichnung dargestellt und wird im folgenden näher beschrieben.

Es zeigen:

Fig. 1 Eine Draufsicht auf einen in bezug auf die Fahrtrichtung linken Teil einer Vorderachse,

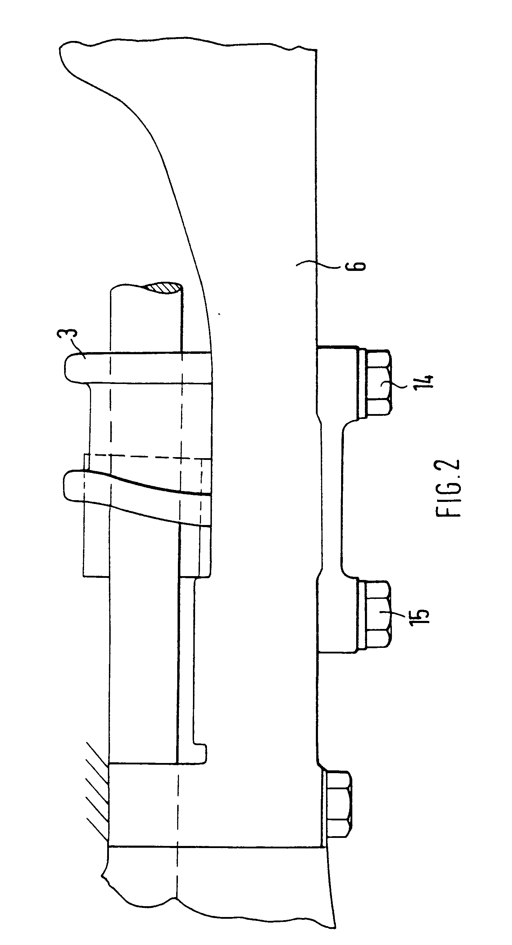

Fig. 2 eine Ansicht auf einen Querträger mit Längsträger in Pfeilrichtung Z der Fig. 3 gesehen,

Fig. 3 eine schaubildliche Darstellung des linken Teils der Vorderachse gemäß Fig. 1,

Fig. 4 einen Schnitt durch das - in bezug auf die Fahrtrichtung - vordere Ende des Längsträgers nach der Linie IV-IV der Fig. 1 und

Fig. 5 einen Schnitt durch das hintere Ende des Längsträgers nach der Linie V-V der Fig. 1.

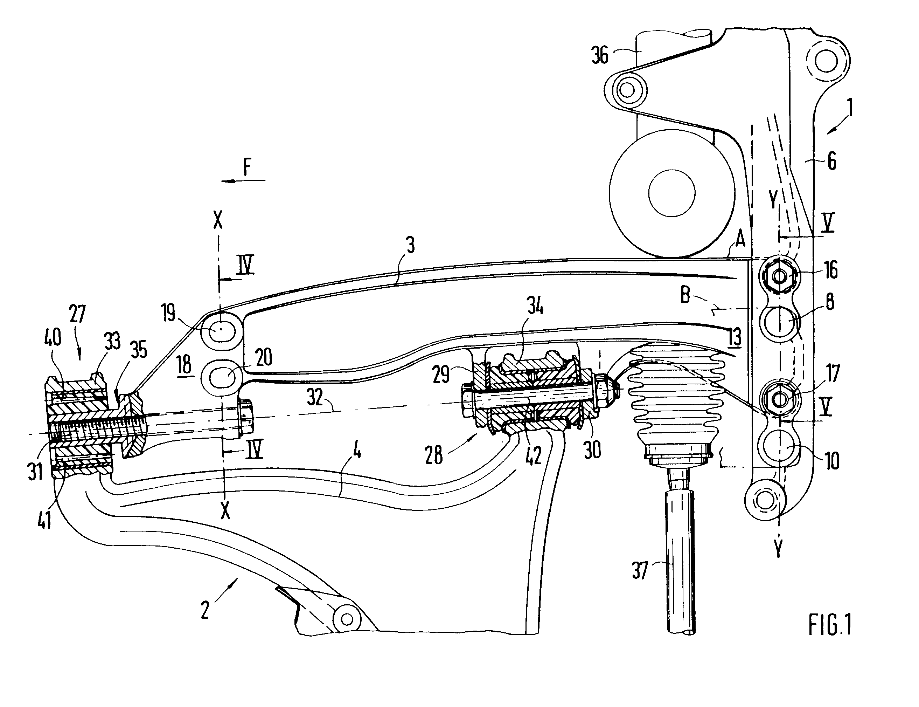

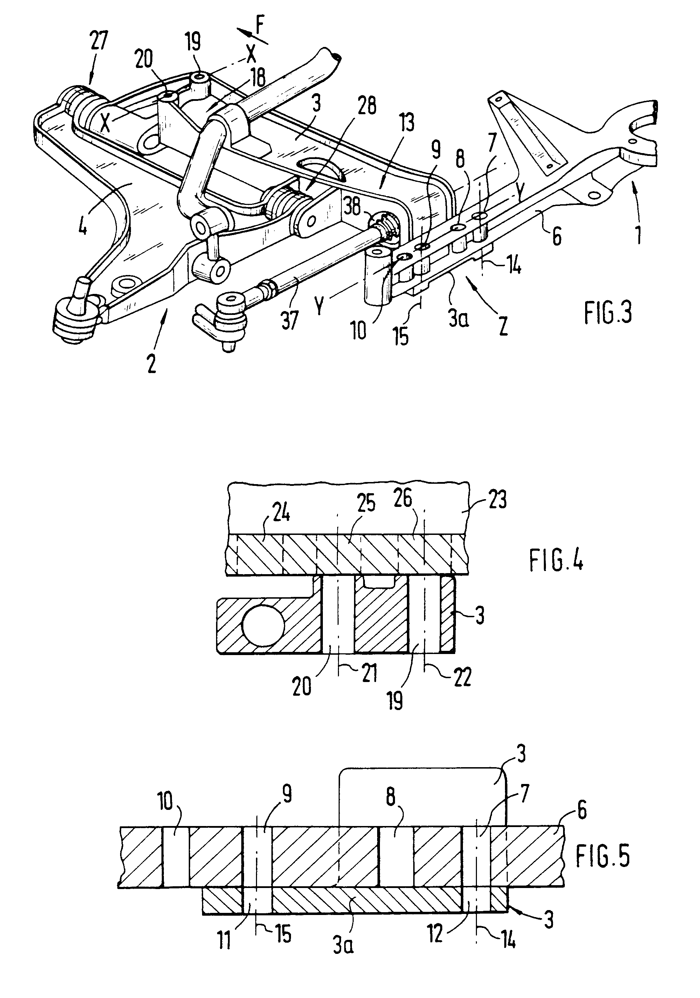

Die Vorderachse 1 umfaßt im wesentlichen für jedes Rad einer Fahrzeugseite eine Radlenkereinheit 2 bestehend aus einem Längsträger 3 und einem Radführungsglied 4. Die Radlenkereinheit ist mit einer Spurweite gemäß Position A, wie in Fig. 1 dargestellt, und in eine Position (B), wie strichpunktiert gezeigt, in Fahrzeuge einbaubar. Hierzu sind im Querträger Durchgangsbohrungen 7, 8, 9 und 10 vorgesehen, wobei jeweils zwei dieser Bohrungen 7 und 9 bzw. 8 und 10 korrespondierend mit zwei Bohrungen 11 und 12 im Längsträger 3 in einem - in bezug auf die Fahrtrichtung F - hinteren Ende 13 des Längsträgers 3 angeordnet sind. Über Schrauben, die symbolisch in Fig. 5 als Mittellinien dargestellt sind und welche am Querträger über Muttern 16, 17 gesichert werden, ist der Längsträger 3 mit dem Querträger 6 lösbar verbindbar. Das gegenüberliegende vordere freie Ende 18 des Längsträgers 3 weist ebenfalls Durchgangsbohrungen 19 und 20 auf, in denen Durchgangsschrauben 21, 22, die in Fig. 4 symbolisch als Mittellinien dargestellt sind, angeordnet und mit dem Fahrzeugaufbau verbunden werden.

Bei eine Verwendung der Radlenkereinheit 2 z.B. für eine Spurweite in einem anderen Fahrzeug wird der Längsträgers 3 mit seinem vorderen Ende 18 und seinem hinteren Ende 13 zu den benachbarten Bohrungen, bzw. Festsetzeinrichtungen in dem gezeigten Beispiel zu den freien Bohrungen 8 und 10 im Querträger 6 sowie zu den Festsetzeinrichtungen 24 und 25 im Fahrzeugaufbau 23 versetzt und eine Verbindung über die Schraubmittel 14, 15 und 21, 22 hergestellt. In den Zeichnungen ist jeweils nur die Position A dargestellt. Bei einer Verwendung der entsprechenden Durchgangsbohrung 9 bzw. 8, 10 im Querträger sowie der entsprechenden Festsetzeinrichtungen 25, 26 bzw. 24, 25 im Fahrzeugaufbau 23 wird eine Position B mit einer breiteren Spurweite erzielt, wie in Fig. 1 in strichpunktierten Linien an Hand der Lage des Längsträgers 3 angedeutet ist.

Die Befestigungsschrauben 21, 22 am vorderen Ende 18 des Längsträgers 3 dienen gleichzeitig zum unmittelbaren Befestigen der Radlenkereinheit 2 am Fahrzeugaufbau 23, wobei der Querträger 6 unabhängig vom Längsträger 3 am Fahrzeugaufbau 23 festsetzbar wird.

Das Radführungsglied 4 der Radlenkereinheit 2 ist über zwei Gelenke 27, 28 außenseitig des Längsträgers 3 abgestützt gehalten, wobei das - in bezug auf die Fahrtrichtung F - hintenliegende zweite Gelenk 28 zwischen zwei am Längsträger seitlich angeformten Flanschen 29, 30 angeordnet ist und das vornliegende erste Gelenk 27 stirnseitig des Längsträgers 3 auf einem etwa in einer horizontalen Ebene angeordneten und in Fahrzeuglängsrichtung verlaufenden Bolzen 31 gehalten wird. Beide Gelenke 27, 28 bilden eine annähernd in Fahrzeuglängsrichtung und parallel zur Fahrzeuglängsachse verlaufende Lenkerschwenkachse 32.

Die Gelenke 27, 28 sind am Radführungsglied 4 in vorstehend angeformten Lageraugen 33 und 34 gehalten, wobei das vornliegende Lagerauge 33 eine parallele Lage zur Stirnfläche 35 des Längsträgers 3 einnimmt. Die Gelenke 27, 28 sind mit unterschiedlicher Kennung ausgeführt, wobei das vornliegende Gelenk 27 in Radial- und Axialrichtung weicher ausgeführt ist als das hintenliegende Gelenk 28 und hierzu nierenförmige Ausnehmungen 40, 41 aufweist. Die innenliegende Ausnehmung 40 ist größer ausgeführt als die außenliegende Ausnehmung 41, so daß insbesondere bei auf das Rad einwirkenden Kräften bei einem Bremsvorgang eine Nachspurstellung erzielt wird. Das hintenliegende Lager 28 bildet bei einer elastokinematischen Radverstellung aufgrund seiner Ausbildung einen ideellen Drehpol 42.

Eine mit dem Querträger 6 verbundene Lenkvorrichtung 36 ist - in bezug auf die Fahrtrichtung F - innenliegend des Trägers 6 angeordnet und weist eine mit einem Radträger verbundene Spurstange 37 auf, die den Längsträger 3 an seinem hinteren Ende 13 durchquert. Hierzu weist dieser eine Durchgangsöffnung 38 auf, die unmittelbar benachbart eines Befestigungsabschnittes 3a zum Querträger 6 liegt.

## Patentansprüche

1.  Vorderachse für Kraftfahrzeuge, mit einer Radlenkereinheit (2), die ein an einem Längsträger (3) in Gelenken (27 und 28) schwenkbar gehaltenes Radführungsglied (4) umfaßt, das mit dem Längsträger (3) als eine Einheit am Fahrzeugaufbau (23) über Schraubmittel (14, 15 und 21, 22) befestigbar ist,
    dadurch gekennzeichnet,
    daß die Vorderachse einen am Fahrzeugaufbau befestigten und ein Lenkgetriebe aufnehmenden Querträger aufweist,
    daß der Querträger (6) endseitig jeweils mit der Radlenkereinheit (2) verbunden ist, und
    daß die Radlenkereinheit (2) mit dem Längsträger (3) als eine Einheit am Querträger (6) sowie am Fahrzeugaufbau in zwei Radspurweitenstellungen (A und B) befestigbar ist.

2.  Vorderachse nach Anspruch 1, dadurch gekennzeichnet, daß der Längsträger (3) in seinen beiden Endabschnitten (13 und 18) nebeneinander in einer Querebene (X-X und Y-Y) liegende Bohrungen (11, 12 und 19, 20) für Befestigungsschrauben (15, 14 und 21, 22) aufweist und diese Bohrungen (11, 12) korrespondierend mit Bohrungen (7, 9 bzw. 8, 10) im Querträger (6) bzw. mit Festsetzeinrichtungen (25, 26 bzw. 24, 25) im Fahrzeugaufbau (23) angeordnet sind.

3.  Vorderachse nach den Ansprüchen 1 oder 2, dadurch gekennzeichnet, daß das Schraubmittel (21, 22) im Längsträger (3) gleichzeitig zum Festsetzen der Radlenkereinheit (2) am Fahrzeugaufbau (23) ausgeführt sind.

4.  Vorderachse nach den Ansprüchen 1, 2 oder 3, dadurch gekennzeichnet, daß eine vordere Endabschnitt (18) des Längsträgers (3) eine stirnseitig angeordnete und in einer horizontalen Ebene liegende fliegende Aufnahme (31) für ein Gelenk (27) des Radführungsgliedes (4) aufweist und dieses Gelenk (27) mit einem an der Außenseite des Längsträgers (3) zwischen zwei angeformten Flanschen (29, 30) gehaltenen weiteren Gelenk (28) eine etwa parallel zur Fahrzeuglängsachse verlaufende Lenkerdrehachse (32) bildet.

5. Vorderachse nach Anspruch 4, dadurch gekennzeichnet, daß die beiden Gelenke (27, 28) jeweils in den dem Längsträger (3) zugerichteten und vorstehend angeformten Gelenkaugen (33, 34) festsetzbar sind und beide Gelenke (27, 28) aus Gummi-Metall-Elementen bestehen, wobei das vordere Gelenk (27) in Radial- und Axialrichtung weicher ausgeführt ist als das hintere Gelenk (28) und in einer horizontalen Ebene nierenförmige Ausnehmungen (40, 41) aufweist, die mit unterschiedlichen Großen in radialen Erstreckung ausgeführt sind, derart, daß die innenliegende Ausnehmung (40) größer ausgeführt ist als die außenliegende Ausnehmung (41).

6. Vorderachse nach einem oder mehreren der vorhergehenden Ansprüche, dadurch gekennzeichnet, daß der dem Querträger (6) zugerichtete Endabschnitt (13) des Längsträgers (3) eine Durchgangsöffnung (38) für eine querverlaufende Spurstange (37) des Lenkgetriebes (36) aufweist und ein den Querträger (6) von der Unterseite her übergreifenden Befestigungsabschnitt (3a) umfaßt, der die Durchgangsbohrungen (11, 12) für die Befestigungsschrauben (14, 15) aufweist.

## Claims

1. A front axle for motor vehicles, having a wheel-support unit (2) which comprises a wheel guide member (4) held pivotally on a longitudinal support (3) in joints (27 and 28) and securable as one unit with the longitudinal support (3) on the vehicle body (23) by way of screw means (14, 15 and 21, 22), characterized in that the front axle comprises a transverse support secured to the vehicle body and receiving a steering mechanism, the end of the transverse support (6) is connected in each case to the wheel-support unit (2), and the wheel-support unit (2) is securable to the longitudinal support (3) as one unit on the transverse support (6) and on the vehicle body in two wheel-track width settings (A and B).

2. A front axle according to Claim 1, characterized in that the longitudinal support (3) has bores (11, 12 and 19, 20) formed in its two end portions (13 and 18) adjacent to each other in a transverse plane (X-X and Y-Y) for fastening bolts (15, 14 and 21, 22), and the said bores (11, 12) are arranged corresponding with bores (7, 9 and 8, 10 respectively) in the transverse support (6) and fastening devices (25, 26 and 24, 25 respectively) in the vehicle body (23) respectively.

3. A front axle according to Claim 1 or 2, characterized in that the screw means (21, 22) in the longitudinal support (3) are designed at the same time for securing the wheel-support unit (2) to the vehicle body (23).

4. A front axle according to Claim 1, 2 or 3, characterized in that a front end portion (18) of the longitudinal support (3) has an overhung receiving means (31) - arranged at the end and lying in a horizontal plane - for a joint (27) of the wheel guide member (4) and the said joint (27) together with a further joint (28) held between two integrally moulded flanges (29, 30) on the outside of the longitudinal support (3) forms a support-arm rotation axis (32) extending substantially parallel to the longitudinal axis of the vehicle.

5. A front axle according to Claim 4, characterized in that the two joints (27, 28) are each securable in the joint eyes (33, 34) facing the longitudinal support (3) and integrally formed in a projecting manner, and the two joints (27, 28) comprises rubber-metal members, the front joint (27) being made more yielding in the radial and axial directions than the rear joint (28) and being provided with kidney-shaped recesses (40, 41) lying in a horizontal plane and constructed differently in size in the radial direction, in such a way that the recess (40) lying on the inside is made larger than the recess (41) lying on the outside.

6. A front axle according to one or more of the preceding Claims, characterized in that the end portion (13) of the longitudinal support (3) facing the transverse support (6) has a through opening (38) for a transversely extending track rod (37) of the steering mechanism (36) and comprises a fastening portion (3a) engaging over the transverse support (6) from the underside and comprising the through bores (11, 12) for the fastening bolts (14, 15).

## Revendications

1. Essieu avant pour véhicules automobiles comportant un ensemble de bielles de roue (2) qui comprend un organe de guidage de roue (4) maintenu pivotant sur un longeron (3) dans des articulations (27 et 28), lequel organe de guidage de roue peut être fixé avec le longeron (3) sous la forme d'une unité, sur la carrosserie du véhicule (23), par des moyens à vis (14, 15 et 21, 22), caractérisé en ce que l'essieu avant comporte une traverse fixée sur la carrosserie du véhicule et logeant un boîtier de direction, en ce que la traverse (6) est reliée à chacune de ses extrémités à l'ensemble de bielles de roue (2) et en ce que l'ensemble de bielles de roue (2) peut être fixé avec le longeron (3) sous la forme d'un unité sur la traverse (6) ainsi que sur la carrosserie du véhicule, dans deux positions d'écartement des roues (A et B).

2. Essieu avant selon la revendication 1, caractérisé en ce que le longeron (3) comporte, dans ses deux parties terminales (13 et 18), des trous (11, 12 et 19, 20), juxtaposés dans un plan transversal (X-X et Y-Y), pour des vis de fixation (15, 14 et 21, 22) et en ce que ces trous (11, 12) correspondent à des trous (7, 9) ou (8, 10) pratiqués dans la traverse (6) ou à des dispositifs de blocage (25, 26) ou (24, 25) de la carrosserie (23) du véhicule.

3. Essieu avant selon les revendications 1 ou 2, caractérisé en ce que le moyen de vissage (21, 22) du longeron (3) est conçu en même temps pour bloquer l'ensemble de bielles de roue (2) sur la carrosserie (23) du véhicule.

4. Essieu avant selon les revendications 1, 2 ou 3 caractérisé en ce qu'une partie terminale (18) avant du longeron (3) comporte un logement (31), disposé frontalement et reposant aligné dans un plan horizontal, pour une articulation (27) de l'organe de guidage de roue (4) et en ce que cette articulation (27) forme, avec une autre articulation (28) maintenue entre deux brides (29, 30) formées d'un seul tenant, sur le côté extérieur du longeron (3), un axe tournant de bielle (32) à peu près parallèle à l'axe longitudinal du véhicule.

5. Essieu avant selon la revendication 4, caractérisé en ce que les deux articulations (27, 28) peuvent être fixées chacune dans les oeillets d'articulation (33, 34) formés saillants et dirigés vers le longeron (3) et en ce que les deux articulations (27, 28) sont des éléments en caoutchouc et métal, l'articulation avant (27) étant plus souple dans la direction radiale et axiale que l'articulation arrière (28) et présentant des évidements (40, 41) réniformes dans un plan horizontal, lesquels ont des dimensions différentes dans leur extension axiale de telle sorte que l'évidement (40) intérieur est plus grand que l'évidement (41) extérieur.

6. Essieu avant selon une ou plusieurs des revendications précédentes, caractérisé en ce que la partie terminale (13), tournée vers la traverse (6), du longeron (3), présente une ouverture débouchante (38) pour une barre d'accouplement (37) s'étendant transversalement, du boîtier de direction (36) et comprend une partie de fixation (3a) passant sur la traverse (6), à partir de la face inférieure, laquelle partie de fixation comporte les trous débouchants (11, 12) pour les vis de fixation (14, 15).

FIG.1

FIG.2

EP 0 324 913 B1

FIG.3

FIG.4

FIG.5